(19) Europäisches Patentamt

European Patent Office

Office européen des brevets

(11) **EP 4 604 203 A1**

(12) **EUROPEAN PATENT APPLICATION**
published in accordance with Art. 153(4) EPC

(43) Date of publication:
**20.08.2025   Bulletin 2025/34**

(21) Application number: **23929069.5**

(22) Date of filing: **24.03.2023**

(51) International Patent Classification (IPC):
*H01M 4/36* (2006.01)        *H01M 4/131* (2010.01)
*H01M 10/0525* (2010.01)

(52) Cooperative Patent Classification (CPC):
**H01M 4/131; H01M 4/36; H01M 10/0525;**
**Y02E 60/10**

(86) International application number:
**PCT/CN2023/083773**

(87) International publication number:
**WO 2024/197466 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology**
**(Hong Kong) Limited**
**Hong Kong (HK)**

(72) Inventors:
• **YU, Honggang**
  **Ningde, Fujian 352100 (CN)**
• **JIANG, Hao**
  **Ningde, Fujian 352100 (CN)**

• **ZHANG, Haiming**
  **Ningde, Fujian 352100 (CN)**
• **YANG, Chenglong**
  **Ningde, Fujian 352100 (CN)**
• **JIN, Haizu**
  **Ningde, Fujian 352100 (CN)**
• **GAO, Jingyu**
  **Ningde, Fujian 352100 (CN)**
• **LI, Jingru**
  **Ningde, Fujian 352100 (CN)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **POSITIVE ELECTRODE SHEET AND MANUFACTURING METHOD THEREFOR, BATTERY CELL, BATTERY, AND ELECTRICAL DEVICE**

(57)    The present application provides a positive electrode plate and a manufacturing method therefor, a battery cell, a battery, and an electrical apparatus. The positive electrode plate comprises a current collector, a first positive electrode active material layer, and a second positive electrode active material layer; the first positive electrode active material layer is arranged on at least one side of the current collector, and the second positive electrode active material layer is arranged on the first positive electrode active material layer; the first positive electrode active material layer comprises a first positive electrode active material, the second positive electrode active material layer comprises a second positive electrode active material, the first positive electrode active material comprises a lithium-containing phosphate of olivine structure, and the second positive electrode active material comprises a cobalt-containing lithium metal oxide. The positive electrode plate can effectively im- prove the influence of the concentration polarization of a battery on the performance of the battery, thereby helping to improve the capacity and cycle performance of the battery.

**FIG. 2**

EP 4 604 203 A1

**Description**

**TECHNICAL FIELD**

The present application relates to the field of batteries, and more specifically relates to a positive electrode plate, a preparation method therefor, a battery cell, a battery, and an electrical apparatus.

**BACKGROUND**

In recent years, lithium-ion batteries are widely applied in energy storage power systems, such as water, fire, wind, and solar power stations, as well as many fields, such as electric tools, electric bicycles, electric motorcycles, electric vehicles, military equipment, and aerospace, thereby achieving great development, and thus putting forward higher requirements for the capacity and cycling performance of the lithium-ion batteries.

Battery polarization is one of the factors affecting the capacity and cycling performance of the lithium-ion batteries, thereby restricting the developed of the lithium-ion batteries. Therefore, how to reduce the impact of the battery polarization on the battery performance becomes a technical problem to be urgently solved.

**SUMMARY OF THE INVENTION**

In view of the above technical problems, an object of the present application is to provide a positive electrode plate, a preparation method therefor, a battery cell, a battery, and an electrical apparatus. The positive electrode plate is applied in the battery, and can effectively improve the impact of electrochemical polarization of the battery and concentration polarization of an electrolyte solution on the battery performance, thereby contributing to improving the capacity and cycling performance of the battery.

In a first aspect, a positive electrode plate is provided, comprising a current collector, a first positive electrode active material layer, and a second positive electrode active material layer, wherein the first positive electrode active material layer is arranged on at least one side of the current collector, the second positive electrode active material layer is arranged on the first positive electrode active material layer; the first positive electrode active material layer comprises a first positive electrode active material, the second positive electrode active material layer comprises a second positive electrode active material, the first positive electrode active material comprises a lithium-containing phosphate of olivine structure, and the second positive electrode active material comprises a cobalt-containing lithium metal oxide.

In an embodiment of the present application, a positive electrode film layer on the positive electrode plate has a double-layer structure, of which the upper layer is provided with the cobalt-containing lithium metal oxide, and the lower layer is provided with the lithium-containing phosphate of olivine structure. With the material arrangement of the upper and lower layers of the positive electrode film layer, the upper layer of the positive electrode film layer has better lithium-ion kinetics than the lower layer of the positive electrode film layer. In other words, the upper layer of the positive electrode film layer has better lithium-ion conductivity than the lower layer of the positive electrode film layer. Therefore, the second positive electrode active material with better lithium-ion kinetics is arranged on the upper layer of the positive electrode film layer with a better electrolyte infiltration degree, and the first positive electrode active material is arranged on the lower layer of the positive electrode film layer with a poorer electrolyte infiltration degree than the upper layer, so that the distribution of current density in the thickness direction of the positive electrode plate matches kinematic properties of ions of the positive electrode active material, thereby reducing the charging polarization voltage of the positive electrode plate, and contributing to improving the capacity performance and cycling performance of the battery.

It should be understood that the upper layer of the positive electrode film layer of the present application is the positive electrode active material layer on the positive electrode plate close to an electrolyte, such as the second positive electrode active material layer; and the lower layer of the positive electrode film layer is the positive electrode active material layer on the positive electrode plate close to the current collector, such as the first positive electrode active material layer.

In some embodiments, the manganese-based lithium transition-metal phosphate comprises a compound represented by formula (I):

$$Li_{(1+x1)}Mn_{a1}M1_{(1-a1)}P_{(1-m)}O_{(4-n)} \qquad (I)$$

wherein M1 represents a metal element, $-0.2 \leq x1 \leq 0.2$, $0.1 \leq a1 \leq 0.9$, $0 \leq m \leq 0.1$, and $0 \leq n \leq 0.1$.

In some embodiments, the M1 comprises one or more of Fe, Al, Cu, Cr, Mg, Zn, Ni, Ti, V, Zr, Co, Ga, Sn, Sb, Nb, and Ge.

In some embodiments, the cobalt-containing lithium metal oxide comprises a layered cobalt-containing lithium metal oxide.

In some embodiments, the cobalt-containing lithium metal oxide comprises a compound represented by formula (II):

$$Li_{(1+x2)}Co_{a2}M2_{(1-a2)}O_{(2-y)}A_y \qquad (II)$$

wherein M2 represents a metal element, A represents an oxygen-doped element, A comprises one or more of S, F, Cl, and Br, $-0.2 \le x2 \le 0.2$, $0.02 \le a2 \le 0.5$, and $0 \le y < 2$.

It should be understood that during charging and discharging, the battery will be accompanied by deintercalation and consumption of Li, Li is at different molar contents when the battery is discharged to different states, and the above definition of x1 and x2 comprises the molar contents of Li in different charge-discharge states of the battery (generally in the battery voltage of 2.0 V-5.0 V).

In some embodiments, the M2 comprises one or more of Ni, Fe, Cr, Mn, Ti, Zn, V, Al, and Zr.

In some embodiments, the positive electrode active material comprises the first positive electrode active material and the second positive electrode active material, a mass ratio of the first positive electrode active material to the positive electrode active material is m, and a mass ratio of the second positive electrode active material to the positive electrode active material is n, wherein $0 < m < 1$, $0 < n < 1$, and $0 < m+n \le 1$.

In some embodiments, the first positive electrode active material and the second positive electrode active material satisfy: $0.2 \le K \le 0.6$;

wherein

$$K = \frac{n \times a_2}{m \times a_1}.$$

In an embodiment of the present application, the K value is controlled within an appropriate range, to flexibly adjust the kinetic distribution of lithium ions of the positive electrode active material in the thickness direction of the positive electrode plate, thereby better matching current density distribution caused by concentration polarization of an electrolyte solution, and effectively improving the impact of electrochemical polarization and electrolyte solution concentration polarization on the battery performance.

In some embodiments, in a battery cell comprising the positive electrode plate, conductivity $\sigma$ of an electrolyte satisfies: $3.3$ mS cm$^{-1} \le \sigma \le 13$ mS cm$^{-1}$.

In a second aspect, a method for preparing a positive electrode plate is provided, including: providing a current collector; arranging a first positive electrode active material layer on the current collector; and arranging a second positive electrode active material layer on the first positive electrode active material layer; wherein the first positive electrode active material layer comprises a first positive electrode active material, the second positive electrode active material layer comprises a second positive electrode active material, the first positive electrode active material comprises a lithium-containing phosphate of olivine structure, and the second positive electrode active material comprises a cobalt-containing lithium metal oxide.

In a third aspect, a battery cell is provided, comprising the positive electrode plate in any one embodiment in the first aspect or the positive electrode plate prepared in accordance with the method in any one embodiment in the second aspect.

In some embodiments, the battery cell comprises an electrolyte, and conductivity $\sigma$ of the electrolyte satisfies: $3.3$ mS cm$^{-1} \le \sigma \le 13$ mS cm$^{-1}$.

In a fourth aspect, a battery is provided, comprising the battery cell in any one embodiment in the third aspect.

In a fifth aspect, an electrical apparatus is provided, comprising the battery cell in any one embodiment in the third aspect and/or the battery in any one embodiment in the fourth aspect.

**BRIEF DESCRIPTION OF THE DRAWINGS**

To more clearly describe the technical solutions of the examples of the present application, the drawings to be used in the examples of the present application will be briefly introduced below. Apparently, the drawings described below are merely some examples of the present application. For those of ordinary skills in the art, other drawings may also be obtained based on these drawings without making creative work. In the drawings, the figures are not drawn to the actual scale.

FIG. 1 is a schematic structural diagram of a positive electrode plate of the present application.

FIG. 2 is a SEM pattern of a positive electrode plate of the present application.

FIG. 3 is a schematic flowchart of a method for preparing a positive electrode plate of the present application.

FIG. 4 is a schematic diagram of a battery cell of the present application.

FIG. 5 is a schematic diagram of a battery module of the present application.

FIG. 6 is a schematic diagram of a battery of the present application.

FIG. 7 is another schematic diagram of a battery of the present application.

## DETAILED DESCRIPTION

Embodiments of a positive electrode plate, a preparation method therefor, a battery cell, a battery, and an electrical apparatus of the present application are specifically disclosed below with appropriate reference to the detailed description of the drawings. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

In the description of the present application, it should be noted that, unless otherwise stated, the "plurality of" means two or more; and the directions or position relationships indicated by the terms, such as "above," "below," "left," "right," "inner," and "outer," are only provided to facilitate describing the present application and simplifying the description, rather than indicating or implying that the apparatus or element referred to must have a specific direction, or be constructed and operated in a specific direction, and therefore cannot be construed as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Unless otherwise particularly stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further comprise step (c), which means that step (c) may be added to the method in any order, for example, the method may comprise steps (a), (b) and (c), or may comprise steps (a), (c) and (b), or may comprise steps (c), (a) and (b), and so on.

Unless otherwise particularly stated, all embodiments and optional embodiments of the present application may be combined with each other to form new technical solutions.

Unless otherwise particularly stated, all technical features and optional technical features of the present application may be combined with each other to form new technical solutions.

Unless otherwise particularly stated, the following terms have the following meanings. Any undefined terms have their technically accepted meanings.

In general, a battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through. In some embodiments, the battery according to the present application is also referred to as a secondary battery.

The present application takes a lithium-ion battery as an example, which is a typical secondary battery, and is also known as a rocking chair battery because it is charged and discharged relying on chemical reactions of deintercalation of lithium ions between the positive and negative electrodes. During charging of the lithium-ion battery, the lithium ions are deintercalated from the positive electrode, move, and are intercalated into the negative electrode; while during discharging, the lithium ions are deintercalated from the negative electrode, move, and are intercalated into the positive electrode.

It should be understood that the "lithiation" and "intercalation" process in the present application refer to a process in which lithium ions are intercalated in a positive electrode material and a negative electrode material due to electrochemical reactions, and the "deintercalation" and "delithiation" process in the present application refers to a process in which lithium ions are deintercalated from the positive electrode material and the negative electrode material due to electrochemical reactions.

With the increasingly extensive application of the lithium-ion batteries, higher requirements are put forward for the capacity and cycling performance of the batteries. Battery polarization is one of the reasons that tend to cause capacity loss and cycling performance degradation during the charging and discharging of the lithium-ion batteries. Battery polarization is generally classified into ohmic polarization, electrochemical polarization, and concentration polarization, wherein the concentration polarization is polarization caused by smaller diffusion speed of the lithium ions involved in the electrochemical reactions in the liquid or solid phase of the batteries than electron transport speed in the electrochemical reactions. The electrochemical polarization is a polarization phenomenon in which the electrode potential deviates from the equilibrium potential due to the slowness of the electrochemical reactions. In particular, in the later charging stage of a battery, when an electrode assembly is in a high state of charge, the electrochemical polarization and the concentration polarization at the positive electrode plate increase significantly, thereby seriously affecting the charge capacity of the battery, then affecting the subsequent discharge capacity, and reducing the battery capacity. In addition, as the battery cycles, the polarization phenomenon intensifies, thereby resulting in adverse effects on the cycling performance of the battery.

In view of this, an embodiment of the present application provides a positive electrode plate. A film layer on the positive electrode plate comprises a first positive electrode active material layer arranged on a current collector and a second positive electrode active material arranged on the first positive electrode active material layer; wherein the first positive electrode active material layer comprises a first positive electrode active material, the second positive electrode active material comprises a second positive electrode active material; the first positive electrode active material comprises a lithium-containing phosphate of olivine structure, and the second positive electrode active material comprises a cobalt-containing lithium metal oxide. The first positive electrode active material with higher lithium-ion kinetics is arranged in the first positive electrode active material layer, and the second positive electrode active material is arranged in the second positive electrode active material layer, thereby effectively improving the impact of the electrochemical polarization and concentration polarization on the battery performance, and contributing to improving the capacity and cycling performance of the battery.

Then, the parts, such as the positive electrode plate, the negative electrode plate, and the separator, of the battery are introduced in detail.

[Positive electrode plate]

The positive electrode plate comprises a positive electrode current collector and a positive electrode film layer arranged on at least one surface of the positive electrode current collector, and the positive electrode film layer comprises a positive electrode active material. It should be understood that the positive electrode film layer is a film layer arranged on the positive electrode current collector.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector may be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

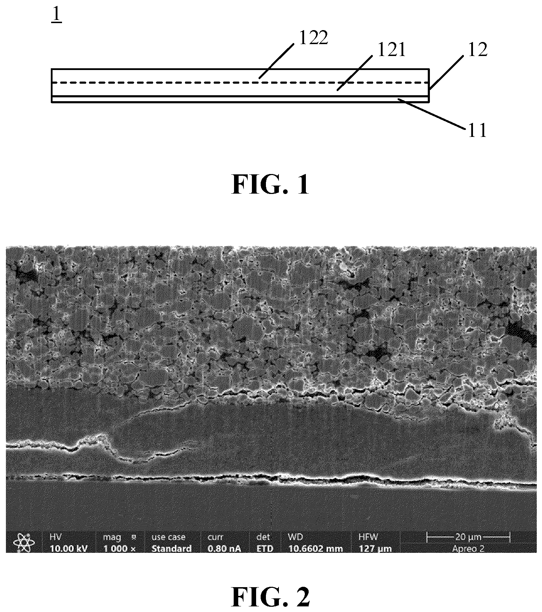

FIG. 1 is a schematic structural diagram of a positive electrode plate provided in an embodiment of the present application.

As shown in FIG. 1, the positive electrode plate 1 comprises a current collector 11 and a film layer 12 arranged on at least one side of the current collector 11.

The film layer 12 comprises a first positive electrode active material layer 121 and a second positive electrode active material layer 122. The first positive electrode active material layer 121 is arranged on the positive electrode current collector, and the second positive electrode active material layer 122 is arranged on the first positive electrode active material layer 121.

The first positive electrode active material layer 121 comprises a first positive electrode active material, the second positive electrode active material layer 122 comprises a second positive electrode active material, the first positive electrode active material comprises a lithium-containing phosphate of olivine structure, and the second positive electrode active material comprises a cobalt-containing lithium metal oxide.

Generally, the upper layer of the film layer 12 of the positive electrode plate 1 is in full contact with an electrolyte, has a good infiltration degree, and allows a larger current to pass through when an electrochemical reaction occurs; while the lower layer of the film layer 12 has a poorer infiltration degree than the upper layer, and allows a smaller current to pass through when an electrochemical reaction occurs. Therefore, during the battery polarization, the upper layer of the positive electrode plate 1 will be more severely polarized than the lower layer, thereby further aggravating the battery polarization, which is not conducive to the capacity maintenance and cycle stability of the battery.

In this embodiment, the film layer 12 is the above positive electrode film layer. In the positive electrode plate 1, the first positive electrode active material layer 121 arranged on at least one side of the current collector comprises a lithium-containing phosphate of olivine structure, and the second positive electrode active material layer 122 closer to the electrolyte comprises a cobalt-containing lithium metal oxide. Compared with the lithium-containing phosphate of olivine structure, the cobalt-containing lithium metal oxide has higher lithium-ion kinetics, and can, during charging, transfer lithium ions of which the number can match a larger current; while lithium-ion kinetics of the lithium-containing phosphate of olivine structure arranged in the lower layer of the film layer 12 can match a smaller current.

Therefore, in an embodiment of the present application, the first positive electrode active material layer 121 and the second positive electrode active material layer 122 on the positive electrode plate 1 are designed, such that in the thickness direction of the positive electrode plate 1, the kinetic performance of the positive electrode active material matches the current density distribution during charging, thereby effectively improving the concentration polarization during charging, fully utilizing the capacity of the positive electrode active material on the positive electrode plate 1, contributing to the capacity maintenance of the battery, and contributing to improving the cycle stability of the battery.

FIG. 2 is a scanning electron microscope (SEM) pattern of a positive electrode plate 1 provided in an embodiment of the present application.

FIG. 2 shows SEM appearance of a cross section of the positive electrode plate 1 along its thickness direction. It can be seen that the positive electrode plate 1 has a clear three-layer structure, which is sequentially, from the bottom up, a current collector 11 with a smooth appearance, a first positive electrode active material layer 121 with relatively compact powder appearance, and a second positive electrode active material layer 122 with relatively loose powder appearance.

In some embodiments, a lithium-containing phosphate of olivine structure comprises a compound represented by formula (I):

$$Li_{(1+x1)}Mn_{a1}M1_{(1-a1)}P_{(1-m)}O_{(4-n)} \qquad (I)$$

wherein M1 represents a metal element, $-0.2 \leq x1 \leq 0.2$, $0.1 \leq a1 \leq 0.9$, $0 \leq m \leq 0.1$, and $0 \leq n \leq 0.1$.

For example, x1 may be -0.2, -0.1, 0, 0.1, or 0.2, or its value is within a range obtained by combining any two of the above values. a1 may be 0.5, 0.6, 0.7, 0.8, or 0.9, or its value is within a range obtained by combining any two of the above values. m may be 0, 0.02, 0.04, 0.06, 0.08, or 0.1, or its value is within a range obtained by combining any two of the above values. n may be 0.02, 0.04, 0.06, 0.08, or 0.1, or its value is within a range obtained by combining any two of the above values.

In an embodiment of the present application, the lithium-containing phosphate of olivine structure satisfying the above conditions has a high manganese content, and can contribute to a high voltage window in an electrochemical reaction. Therefore, selecting the lithium-containing phosphate of olivine structure satisfying the above conditions contributes to further improving the energy density of a battery.

In some embodiments, the M1 may comprise one or more of Fe, Al, Cu, Cr, Mg, Zn, Ni, Ti, V, Zr, Co, Ga, Sn, Sb, Nb, and Ge.

In some embodiments, a cobalt-containing lithium metal oxide comprises a layered cobalt-containing lithium metal oxide.

The cobalt-containing lithium metal oxide is a widely used positive electrode active material, may include at least one of a lithium-nickel-cobalt oxide, a lithium-manganese-cobalt oxide, a lithium-nickel-cobalt-manganese oxide, (e.g., $LiNi_{1/3}Co_{1/3}Mn_{1/3}O_2$ (or abbreviated as NCM333), $LiNi_{0.5}Co_{0.2}Mn_{0.3}O_2$ (or abbreviated as NCM523), $LiNi_{0.5}Co_{0.25}Mn_{0.25}O_2$ (or abbreviated as NCM211), $LiNi_{0.6}Co_{0.2}Mn_{0.2}O_2$ (or abbreviated as NCM622), $LiNi_{0.8}Co_{0.1}Mn_{0.1}O_2$ (or abbreviated as NCM811), a lithium-nickel-cobalt-aluminum oxide (e.g., $LiNi_{0.85}Co_{0.15}Al_{0.05}O_2$), a modified oxide thereof, and the like, and may include, e.g., a hexagonal structure and a layered structure.

In an embodiment of the present application, the layered cobalt-containing lithium metal oxide is selected. Its ordered layered structure can provide more active sites of lithium ions for the electrochemical reaction, thereby providing higher capacity for the battery.

In some embodiments, the cobalt-containing lithium metal oxide comprises a compound represented by formula (II):

$$Li_{(1+x2)}Co_{a2}M2_{(1-a2)}O_{(2-y)}A_y \qquad (II)$$

wherein M2 represents a metal element, A represents an oxygen-doped element, A comprises one or more of S, F, Cl, and Br, $-0.2 \leq x2 \leq 0.2$, $0.02 \leq a2 \leq 0.5$, and $0 \leq y < 2$.

For example, x2 may be -0.2, -0.1, 0, 0.1, or 0.2, or its value is within a range obtained by combining any two of the above values. a2 may be 0.02, 0.04, 0.06, 0.08, 0.1, 0.15, 0.2, 0.25, 0.3, 0.35, 0.4, 0.45, or 0.5, or its value is within a range obtained by combining any two of the above values. y may be any one value among 0 and 0-2, or its value is within a range obtained by combining any two of the above values.

It should be understood that during charging and discharging, the battery will be accompanied by deintercalation and consumption of Li, Li is at different molar contents when the battery is discharged to different states, and the above definition of x1 and x2 comprises the molar contents of Li in different charge-discharge states of the battery (generally in the battery voltage of 2.0 V-5.0 V).

In some embodiments, the M2 comprises one or more of Ni, Fe, Cr, Mn, Ti, Zn, V, Al, and Zr.

In some embodiments, the positive electrode active material comprises the first positive electrode active material and the second positive electrode active material, a mass ratio of the first positive electrode active material to the positive electrode active material is m, and a mass ratio of the second positive electrode active material to the positive electrode active material is n, wherein $0 < m < 1$, $0 < n < 1$, and $0 < m+n \leq 1$.

Specifically, the manganese element content and the cobalt element content of the positive electrode plate 1 can be flexibly controlled by controlling the mass ratio of the first positive electrode active material in the positive electrode active material and the mass ratio of the second positive electrode active material in the positive electrode active material, so that the positive electrode plate 1 satisfies different use requirements.

In addition, the positive electrode active material may further comprise a third positive electrode active material. For example, the third positive electrode active material comprises lithium iron phosphate. In an example, the first positive electrode active material layer may comprise the first positive electrode active material and the third positive electrode active material. In another example, the second positive electrode active material layer may comprise the second positive electrode active material and the third positive electrode active material.

In some embodiments, the first positive electrode active material and the second positive electrode active material satisfy: $0.2 \leq K \leq 0.6$;

wherein

$$K = \frac{n \times a_2}{m \times a_1}.$$

Specifically, the K value may be controlled by regulating the values of m, n, a1, and a2. The m and n may be regulated by controlling the use amounts of the first positive electrode active material and the second positive electrode active material, thereby controlling the K value. The compound represented by formula (I) and the compound represented by formula (II) can be prepared using a synthetic method commonly used in the art, and the a1 and a2 can be regulated by controlling the use amounts of manganese-derived and cobalt-derived materials during the synthesis, thereby controlling the K value.

In an embodiment of the present application, the K value is controlled within an appropriate range, to flexibly control the lithium-ion kinetics in the thickness direction of the positive electrode plate 1, so that the lithium-ion kinetics in the upper layer of the film layer 12 can match a large current passing through a surface of the positive electrode plate 1 in the later charging stage, and the lithium-ion kinetics in the lower layer of the film layer 12 can match a current passing through the inside of the positive electrode plate 1, thereby effectively improving the polarization of the positive electrode plate 1 during the charging, and reducing the impact of concentration polarization on the battery performance. The K value is flexibly controlled, so that the positive electrode plate 1 can be adapted to batteries of different models and different energy densities.

In some embodiments, the film layer 12 further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the film layer 12 further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate 1 may be prepared by: dispersing the above ingredients, such as the first positive electrode active material, the conductive agent, the binder, and any other ingredient, for preparing the positive electrode plate in a solvent (such as N-methylpyrrolidone) to form a first positive electrode slurry; dispersing the second positive electrode active material, the conductive agent, the binder, and any other ingredient in a solvent (such as N-methylpyrrolidone) to form a second positive electrode slurry; and coating the first positive electrode slurry and the second positive electrode slurry on the positive electrode current collector, followed by processes, such as drying and cold pressing, to provide the positive electrode plate 1.

[Negative electrode plate]

The negative electrode plate generally comprises a negative electrode current collector and a negative electrode film layer arranged on at least one surface of the negative electrode current collector, and the negative electrode film layer comprises a negative electrode active material. It should be understood that the negative electrode film layer is a film layer arranged on the negative electrode current collector.

As an example, the negative electrode current collector has two surfaces opposite in its own thickness direction, and the negative electrode film layer is provided on either one or both of the two opposite surfaces of the negative electrode current collector.

Optionally, a metal foil or a composite current collector may be used as the negative electrode current collector. For example, a copper foil can be used as the metal foil. The composite current collector may include a high molecular material substrate layer and a metal layer formed on at least one surface of the high molecular material substrate. The composite current collector may be formed by forming a metal material (such as copper, copper alloy, nickel, nickel alloy, titanium, titanium alloy, silver, and silver alloy) on the polymer material substrate (such as a substrate of polypropylene (PP), polyethylene terephthalate (PET), polybutylene terephthalate (PBT), polystyrene (PS), or polyethylene (PE)).

Optionally, a negative electrode active material for a battery well known in the art may be used as the negative electrode active material. As an example, the negative electrode active material may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

Optionally, the negative electrode film layer further comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

Optionally, in an embodiment, the negative electrode film layer further comprises a conductive agent. The conductive agent may be selected from at least one of superconducting carbon, acetylene black, carbon black, Ketjen black, carbon dot, carbon nanotube, graphene, and carbon nanofiber.

Optionally, the negative electrode film layer further comprises other adjuvants, for example, a thickener (such as sodium carboxymethyl cellulose (CMC-Na)).

In some embodiments, the negative electrode plate may be prepared by: forming a negative electrode slurry from the above ingredients for preparing a negative electrode plate. For example, the negative electrode active material, the conductive agent, the binder, and any other ingredient are dispersed in a solvent (e.g., N-methylpyrrolidone) to form a negative electrode slurry. Then, the negative electrode slurry is coated on the negative electrode current collector, followed by processes such as drying and cold pressing, to provide the negative electrode plate.

[Electrolyte]

The electrolyte serves to conduct ions between the positive electrode plate and the negative electrode plate. The type of the electrolyte is not particularly limited in the present application, and can be selected according to requirements.

For example, the electrolyte may be in a liquid state, a gelation state, or an all-solid state.

In some embodiments, the electrolyte is an electrolyte solution. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution may further optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high-temperature or low-temperature performance of the battery.

In some embodiments, conductivity $\sigma$ of the electrolyte solution satisfies: $3.3 \text{ mS cm}^{-1} \leq \sigma \leq 13 \text{ mS cm}^{-1}$.

The conductivity $\sigma$ of the electrolyte solution is associated with factors such as the electrolyte, solute, solvent, and concentration of the electrolyte solution. In some examples, the conductivity $\sigma$ of the electrolyte solution can be controlled by controlling the concentration of the electrolyte solution or changing the type of the electrolyte or the solvent.

[Separator]

In some embodiments, the battery further comprises a separator. The type of the separator is not particularly limited in the present application, for example, any well-known porous-structured separator having good chemical stability and mechanical stability may be selected.

In some embodiments, the material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, the material in each layer may be same or different, which is not particularly limited.

Then, the method for preparing the positive electrode plate 1 in an embodiment of the present application is introduced in detail.

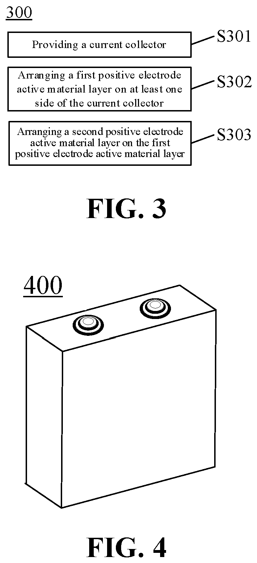

FIG. 3 is a schematic flowchart of a method for preparing a positive electrode plate 1 in an embodiment of the present application. As shown in FIG. 3, the method 300 includes:

S301: providing a current collector 11.

S302: arranging a first positive electrode active material layer 121 on at least one side of the current collector.

S303: arranging a second positive electrode active material layer 122 on the first positive electrode active material layer 121.

The first positive electrode active material layer 121 comprises a first positive electrode active material, the second positive electrode active material layer 122 comprises a second positive electrode active material, the first positive electrode active material comprises a lithium-containing phosphate of olivine structure, and the second positive electrode active material comprises a cobalt-containing lithium metal oxide.

In this embodiment, a film layer 12 of the positive electrode plate 1 that can be prepared using the method 300 has a double-layer structure, and has corresponding technical effects of the positive electrode plate 1, which will not be repeated here.

In some embodiments, the positive electrode plate 1, the negative electrode plate, and the separator may be made into an electrode assembly by a winding process or a stacking process.

In some embodiments, the battery cell may comprise an outer package. The outer package may be used to encapsulate the above electrode assembly and the above electrolyte.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be a plastic, and examples of the plastic may include polypropylene, polybutylene terephthalate, polybutylene succinate, and the like.

The shape of the battery cell is not particularly limited in the present application, and may be a cylinder shape, a square shape, or any other shape. For example, FIG. 4 is a battery cell 400 with a square structure as an example.

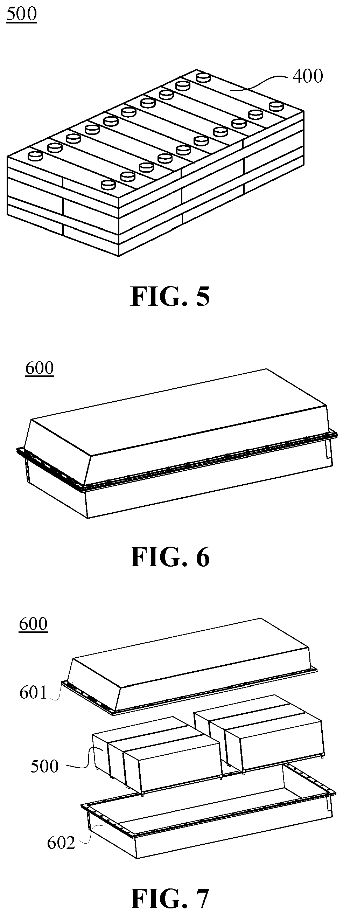

FIG. 5 is a battery module 500 as an example. Referring to FIG. 5, in the battery module 500, a plurality of battery cells 400 may be arranged sequentially along a length direction of the battery module 500, or, of course, may be arranged in any other manner. Furthermore, the plurality of battery cells 400 may be fixed by fasteners.

Optionally, in an embodiment, the battery module 500 may further comprise a shell having an accommodating space, in which the plurality of battery cells 400 are accommodated.

Optionally, in an embodiment, the above battery module 500 may be further assembled into a battery, the number of battery modules 500 comprised in the battery may be one or more, and the specific number may be selected by those skilled in the art based on the application and capacity of the battery.

FIGS. 6 and 7 show a battery 600 as an example. Referring to FIGS. 6 and 7, the battery 600 may comprise a battery box and a plurality of battery modules 500 arranged in the battery box. The battery box comprises an upper box 601 and a lower box 602, wherein the upper box 601 can cover the lower box 602 and forms an enclosed space for accommodating the battery module 500. The plurality of battery modules 500 may be arranged in the battery box in any manner.

It should be understood that in some other embodiments, the above battery 600 may also be referred to as a battery pack. The battery cells 400 may first be assembled into a battery module 500, and the battery 600 is assembled from the battery module 500. Or, the battery 600 may be directly assembled from the battery cells 400, with omission of the intermediate form of the battery module 500.

In addition, the present application further provides an electrical apparatus, comprising at least one of the battery cell 400, the battery module 500, or the battery 600 provided in the present application. The battery cell 400, the battery module 500, or the battery 600 may be used as a power source of the electrical apparatus, or may be used as an energy storage unit of the electrical apparatus. The electrical apparatus may include, but is not limited to, a mobile device (such as a mobile phone or a laptop), an electric vehicle (such as an all-electric vehicle, a hybrid electric vehicle, a plug-in hybrid electric vehicle, an electric bicycle, an electric scooter, an electric golf cart, or an electric truck), an electric train, a ship, a satellite, or an energy storage system.

For the electrical apparatus, the battery cell 400, the battery module 500, or the battery 600 may be selected based on use requirements thereof.

Here is an electrical apparatus as an example. The electrical apparatus is, e.g., an all-electric vehicle, a hybrid electric vehicle, or a plug-in hybrid electric vehicle. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

Examples of the present application are described below. The examples described below are illustrative, are merely used to explain the present application, and should not be construed as limiting the present application. Where specific techniques or conditions are not specified in the examples, the techniques or conditions described in the literature of the art or the product specifications are followed. Where no manufacturers are specified, the employed reagents or instruments are all commercially available conventional products.

[Examples and Comparative Examples]

Example 1

(1) Preparation of a positive electrode plate

A compound represented by formula (I), a conductive agent acetylene black, and a binder polyvinylidene fluoride (PVDF) at a mass ratio of 97:1:2 were dissolved in a solvent N-methylpyrrolidone (NMP). The mixture was sufficiently stirred and fully mixed to obtain a first positive electrode slurry.

A compound represented by formula (II), the conductive agent acetylene black, and the binder polyvinylidene fluoride (PVDF) at a mass ratio of 97:1:2 were dissolved in a solvent N-methylpyrrolidone (NMP). The mixture was sufficiently stirred and fully mixed to obtain a second positive electrode slurry.

The first positive electrode slurry and the second positive electrode slurry were uniformly coated on a positive electrode current collector aluminum foil once or batchwise, wherein the first positive electrode slurry was in the lower layer, and the second positive electrode slurry was in the upper layer. After drying, cold pressing, and cutting, the positive electrode plate was obtained.

In Example 1, $m=0.4$, $n=0.6$, $a1=0.6$, $a2=0.24$, and $K=0.60$.

(2) Preparation of a negative electrode plate

A negative electrode active material, the conductive agent acetylene black, a binder styrene butadiene rubber (SBR), and a thickener sodium carboxymethyl cellulose (CMC) were dissolved in a solvent deionized water. The mixture was sufficiently mixed to obtain a negative electrode slurry. Then, the negative electrode slurry was uniformly coated on a negative electrode current collector copper foil. After cold pressing and cutting, the negative electrode plate was obtained.

(3) Assembly of a battery cell

The positive electrode plate, the separator, and the negative electrode plate were sequentially stacked, such that the separator was located between the positive electrode plate and the negative electrode plate, and can separate the positive electrode plate from the negative electrode plate; then the stacked assembly was winded to obtain an electrode assembly; the electrode assembly was arranged in a case, and dried, and then an electrolyte solution was injected; followed by processes such as formation and standing, to provide the battery cell.

The electrolyte solution comprises a carbonate solvent, and has a conductivity of $\sigma=4.4$ mS cm$^{-1}$.

Example 2

Compared with Example 1, in Example 2, m=0.3, n=0.7, K=0.93, and other parameters are the same as those in Example 1.

Example 3

Compared with Example 2, in Example 3, a1=0.7, a2=0.15, K=0.50, and other parameters are the same as those in Example 2.

Example 4

Compared with Example 1, in Example 4, the second positive electrode active material further comprises lithium iron phosphate (LiFePO$_4$), m=0.4, n=0.5, K=0.50, and other parameters are the same as those in Example 1.

Example 5

Compared with Example 1, in Example 5, a1=0.1, a2=0.24, K=3.6, and other parameters are the same as those in Example 1.

Example 6

Compared with Example 1, in Example 6, a1=0.9, a2=0.24, K=0.40, and other parameters are the same as those in Example 1.

Example 7

Compared with Example 1, in Example 7, a1=0.6, a2=0.02, K=0.05, and other parameters are the same as those in Example 1.

Example 8

Compared with Example 1, in Example 8, a1=0.6, a2=0.5, K=1.25, and other parameters are the same as those in Example 1.

Example 9

Compared with Example 1, in Example 9, the electrolyte solution has a conductivity of $\sigma=3.3$ mS cm$^{-1}$, and other parameters are same as those in Example 1.

Example 10

Compared with Example 1, in Example 10, the electrolyte solution has a conductivity of $\sigma=13$ mS cm$^{-1}$, and other parameters are the same as those in Example 1.

Example 11

Compared with Example 1, in Example 11, a2=0.12, m=0.5, n=0.5, K=0.20, and other parameters are the same as those in Example 1.

Comparative Example 1

Compared with Example 1, the film layer of the positive electrode plate in Comparative Example 1 has a single-layer structure. Specifically, a compound represented by formula (I), a conductive agent acetylene black, and a binder polyvinylidene fluoride (PVDF) at a mass ratio of 97:1:2 were dissolved in a solvent N-methylpyrrolidone (NMP). The mixture was sufficiently stirred and fully mixed to obtain a positive electrode slurry. The positive electrode slurry was uniformly coated on a positive electrode current collector aluminum foil. After drying, cold pressing, and cutting, the positive electrode plate was obtained.

Comparative Example 2

Compared with Example 1, the second positive active material in Comparative Example 2 is lithium nickelate (LiNiO$_2$), m=0.4, n=0.6, a1=0.6, K=0.6, and $\sigma$=4.4 mS cm$^{-1}$.

Table 1 is referred to for specific parameter settings in the examples and comparative examples.

| Example | Active material 1 | Active material 2 | a1 | a2 | m | n | K | $\sigma$ (mS cm$^{-1}$) |
|---|---|---|---|---|---|---|---|---|
| 1 | I | II | 0.6 | 0.24 | 0.4 | 0.6 | 0.60 | 4.4 |
| 2 | I | II | 0.6 | 0.24 | 0.3 | 0.7 | 0.93 | 4.4 |
| 3 | I | II | 0.7 | 0.15 | 0.3 | 0.7 | 0.50 | 4.4 |
| 4 | I | II+LiFePO$_4$ | 0.6 | 0.24 | 0.4 | 0.5 | 0.50 | 4.4 |
| 5 | I | II | 0.1 | 0.24 | 0.4 | 0.6 | 3.60 | 4.4 |
| 6 | I | II | 0.9 | 0.24 | 0.4 | 0.6 | 0.40 | 4.4 |
| 7 | I | II | 0.6 | 0.02 | 0.4 | 0.6 | 0.05 | 4.4 |
| 8 | I | II | 0.6 | 0.5 | 0.4 | 0.6 | 1.25 | 4.4 |
| 9 | I | II | 0.6 | 0.24 | 0.4 | 0.6 | 0.60 | 3.3 |
| 10 | I | II | 0.6 | 0.24 | 0.4 | 0.6 | 0.60 | 13 |
| 11 | I | II | 0.6 | 0.12 | 0.5 | 0.5 | 0.20 | 4.4 |
| Comparative Example | Active material 1 | Active material 2 | a1 | a2 | m | n | K | $\sigma$ (mS cm$^{-1}$) |
| 1 | I | / | 0.6 | / | / | / | / | 4.4 |
| 2 | I | LiNiO$_2$ | 0.6 | / | 0.4 | 0.6 | / | 4.4 |

In Table 1, the active material 1 represents the first positive electrode active material, the active material 2 represents the second positive electrode active material, I represents the compound represented by formula (I), and II represents the compound represented by formula (II).

Performance test results of the batteries in the above examples and comparative examples are detailed in Table 2.

Table 2 Test results of charging time of batteries in different examples and comparative examples

| Example | Capacity retention rate after 200 cycles |
|---|---|
| 1 | 94.1% |
| 2 | 91.0% |
| 3 | 92.2% |
| 4 | 92.0% |
| 5 | 90.1% |

(continued)

| Example | Capacity retention rate after 200 cycles |
|---|---|
| 6 | 92.9% |
| 7 | 80.7% |
| 8 | 90.3% |
| 9 | 93.5% |
| 10 | 94.0% |
| 11 | 91.7% |
| Comparative Example | Capacity retention rate after 200 cycles |
| 1 | 76.2% |
| 2 | 74.2% |

In Example 1, the film layer 12 has a double-layer structure and comprises different active materials, while in Comparative Example 1, the film layer 12 only has a single-layer structure and comprises a single active material. As can be seen from the comparison between Example 1 and Comparative Example 1, the capacity retention rate in Example 1 far exceeds that in Comparative Example 1, and shows excellent cycling performance and capacity performance. This shows that the lithium-containing phosphate of olivine structure is arranged on the upper layer of the film layer 12 of the positive electrode plate 1, and the cobalt-containing lithium metal oxide is arranged on the lower layer of the film layer 12 of the positive electrode plate 1, so that the lithium-ion conductivity of the upper layer of the positive electrode film layer is better than that of the lower layer of the positive electrode film layer, thereby effectively improving battery polarization, and contributing to improving the capacity performance and cycling performance of the battery.

As can be seen from the comparison between Example 1 and Comparative Example 2, lithium nickelate is arranged on the upper layer of the film layer 12, and lithium nickelate also has a layered structure, but its lithium-ion kinetics is inferior to that of the cobalt-containing lithium metal oxide. The capacity retention rate of the battery in Comparative Example 2 after 200 cycles is also significantly lower than that of the battery in Example 1. Therefore, the cobalt-containing lithium metal oxide with excellent lithium-ion kinetics is arranged on the upper layer, so that the lithium-ion transport capacity on the surface of the positive electrode plate 1 can match a larger current on the surface of the positive electrode plate 1, thereby effectively improving the battery polarization, and contributing to improving the capacity performance and cycling performance of the battery.

Compared with Example 1, in Examples 2-3, the values of m and n were regulated respectively, and the values of a1 and a2 were regulated. Therefore, the K values in Example 2 and Example 3 were 0.93 and 0.5 respectively. The K value of 0.93 in Example 2 exceeds the range of 0.2-0.6, while the K value of 0.5 in Example 3 falls within this range. The capacity retention rates of the batteries in Example 2 and Example 3 are 91.0% and 92.2% respectively, that is, the performance in Examples 1 and 3 is better than that in Example 2. This shows that controlling the K value within an appropriate range is more conducive to improving the battery polarization, and improving the cycling performance and capacity performance of the battery.

Compared with Example 1, the second active material layer 122 in Example 4 further comprises lithium iron phosphate, wherein the mass ratio of lithium iron phosphate to the positive electrode active material is 0.1. The film layer 12 of the positive electrode plate 1 in Example 4 also has the same double-layer structure and corresponding materials as that in Example 1, and also shows excellent cycling performance and capacity performance.

Compared with Example 1, in Examples 5-6 and 7-8, the values of a1 and a2 are changed respectively. In Examples 5 and 6, the values of a1 are 0.1 and 0.9 respectively, the corresponding K values are 3.6 and 0.4 respectively, and the capacity retention rates are 90.1% and 92.9% respectively. As a1 increases, the K value decreases. The K value in Example 5 exceeds the range of 0.2-0.6, and the battery in Example 5 has a poorer capacity retention rate performance than the batteries in Examples 1 and 6. In Examples 7 and 8, the values of a2 are 0.02 and 5 respectively, the corresponding K values are 0.05 and 1.25 respectively, and the capacity retention rates are 80.7% and 90.3% respectively. As a2 increases, the K value increases. The K values in Examples 7 and 8 exceed the range of 0.2-0.6. Neither of the batteries in Examples 7 and 8 has a poorer capacity retention rate than the battery in Example 1 with the K value falling within the range of 0.2-0.6. However, the capacity retention rate in Example 8 is better than that in Example 7, indicating that increasing the cobalt content in the positive electrode plate also contributes to improving the capacity retention rate of the battery.

Compared with Example 1, in Examples 9-10, the conductivities of the electrolyte solutions are changed. The values of the conductivities $\sigma$ in Examples 9 and 10 are 3.3 mS cm$^{-1}$ and 13 mS cm$^{-1}$ respectively, both falling within the value range of 3.3 mS cm$^{-1}$-13 mS cm$^{-1}$. The corresponding capacity retention rates are 93.5% and 94.0% respectively, both showing good cycling performance and capacity performance.

Compared with Example 1, in Example 11, a2, m, and n are changed, so that the K value is 0.2, which also falls within the value range of 0.2-0.6, so that those in Example 11 also show good cycling performance and capacity performance.

Then, the test method for the physical parameters and performance parameters mentioned in the embodiments of the present application are briefly introduced.

1. Test method of battery capacity retention rate

At 25 °C, charge and discharge test of the battery was performed under specific test conditions of: connecting the positive and negative electrodes using a blue battery test system, and performing a two-stage charge and discharge test on the battery. The first-stage charging and discharging process includes: standing still for 1 min, charging to 4.2 V at a constant current of 8 mA, then charging at a constant voltage of 4.2 V until a cut-off current of 2 mA, then standing still for 10 min, then discharging at a constant current of 8 mA until a cut-off voltage of 2.5 V, and standing still for 50 h. The first-stage testing is used to form a SEI film by battery formation, and reduce the battery polarization. The second-stage charging and discharging process includes: charging at a constant current of 60 mA until a cut-off voltage of 4.2 V; charging at a constant voltage of 4.2 V until a cut-off current of 2 mA; standing still for 10 min, then discharging at a constant current of 60 mA until a cut-off voltage of 2.5 V, then after the second-stage charging and discharging for 500 cycles, charging to 4.2 V, and stopping the test. The second-stage testing is used to test the cycling performance of the battery. The first charging cycle means that the battery was, after being subjected to the first testing stage, first charged to 4.2 V at a constant current of 60 mA, and then charged at a constant voltage of 4.2 V until a cut-off current of 2 mA. The first-cycle discharge capacity refers to the capacity released from a battery when the battery is discharged to a voltage of 2.5 V at a constant current of 60 mA. Further, respectively based on the first-cycle discharge capacity of 100%, the subsequent discharge capacity after 200 cycles was calculated. A ratio of this capacity to the first-cycle discharge capacity is the capacity retention rate after 200 cycles.

2. Test method of conductivity of electrolyte solution

The conductivity of the electrolyte solution was tested using a conductivity meter (such as a Mettler Toledo conductivity meter) at room temperature (25°C), and then the data was read.

3. Test method of K value

The content of a specified element in the electrode plate and the upper and lower layers of the film layer can be detected by inductively coupled plasma (ICP) testing on the electrode plate, a1*m and a2*n can be detected, and then the K value was calculated as per the formula.

ICP test method: the electrode plate or the electrode plate peeled off from the current collector was digested with aqua regia (concentrated hydrochloric acid:concentrated nitric acid=3: 1) or inverse aqua regia (concentrated nitric acid:concentrated hydrochloric acid=3: 1), and then the element content was measured using an ICP tester.

4. Test method of electrode plate by SEM

An electrode plate of a certain area ($\leq 6\times 6$ cm$^2$) was weighed, and adhered to a conductive adhesive. The conductive adhesive was placed on the sample stage and dried. The processed sample stage was sent to a field emission scanning electron microscope (for example, Zeiss Sigma300 scanning electron microscope), to photograph the material appearance through the field emission scanning electron microscope.

It should be noted that the present application is not limited to the above embodiments. The above embodiments are examples only, and any embodiment that has substantially the same constitutions and has the same effects as the technical ideas within the scope of the technical solutions of the present application is encompassed within the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1. A positive electrode plate, comprising:

a current collector, a first positive electrode active material layer, and a second positive electrode active material layer; wherein
the first positive electrode active material layer is arranged on at least one side of the current collector, the second positive electrode active material layer is arranged on the first positive electrode active material layer;
the first positive electrode active material layer comprises a first positive electrode active material, the second positive electrode active material layer comprises a second positive electrode active material, the first positive electrode active material comprises a lithium-containing phosphate of olivine structure, and the second positive electrode active material comprises a cobalt-containing lithium metal oxide.

2. The positive electrode plate according to claim 1, wherein the lithium-containing phosphate of olivine structure comprises a compound represented by formula (I):

$$Li_{(1+x1)}Mn_{a1}M1_{(1-a1)}P_{(1-m)}O_{(4-n)} \qquad (I)$$

wherein M1 represents a metal element, $-0.2 \leq x1 \leq 0.2$, $0.1 \leq a1 \leq 0.9$, $0 \leq m \leq 0.1$, and $0 \leq n \leq 0.1$.

3. The positive electrode plate according to claim 2, wherein the M1 comprises one or more of Fe, Al, Cu, Cr, Mg, Zn, Ni, Ti, V, Zr, Co, Ga, Sn, Sb, Nb, and Ge.

4. The positive electrode plate according to any one of claims 1-3, wherein the cobalt-containing lithium metal oxide comprises a layered cobalt-containing lithium metal oxide.

5. The positive electrode plate according to any one of claims 1-4, wherein the cobalt-containing lithium metal oxide comprises a compound represented by formula (II):

$$Li_{(1+x2)}Co_{a2}M2_{(1-a2)}O_{(2-y)}A_y \qquad (II)$$

wherein M2 represents a metal element, A represents an oxygen-doped element, A comprises one or more of S, F, Cl, and Br, $-0.2 \leq x2 \leq 0.2$, $0.02 \leq a2 \leq 0.5$, and $0 \leq y < 2$.

6. The positive electrode plate according to claim 5, wherein the M2 comprises one or more of Ni, Fe, Cr, Mn, Ti, Zn, V, Al, and Zr.

7. The positive electrode plate according to any one of claims 1-6, wherein the positive electrode active material comprises the first positive electrode active material and the second positive electrode active material;
a mass ratio of the first positive electrode active material to the positive electrode active material is m, and a mass ratio of the second positive electrode active material to the positive electrode active material is n, wherein $0 < m < 1$, $0 < n < 1$, and $0 < m+n \leq 1$.

8. The positive electrode plate according to claim 7, wherein the positive electrode plate satisfies: $0.2 \leq K \leq 0.6$; wherein

$$K = \frac{n \times a_2}{m \times a_1}.$$

9. The positive electrode plate according to any one of claims 1-8, wherein in a battery cell comprising the positive electrode plate, conductivity $\sigma$ of an electrolyte satisfies: $3.3 \text{ mS cm}^{-1} \leq \sigma \leq 13 \text{ mS cm}^{-1}$.

10. A method for preparing a positive electrode plate, comprising:

providing a current collector;
arranging a first positive electrode active material layer on at least one side of the current collector; and
arranging a second positive electrode active material layer on the first positive electrode active material layer;
wherein the first positive electrode active material layer comprises a first positive electrode active material, the second positive electrode active material layer comprises a second positive electrode active material, the first positive electrode active material comprises a lithium-containing phosphate of olivine structure, and the second positive electrode active material comprises a cobalt-containing lithium metal oxide.

11. A battery cell, comprising the positive electrode plate according to any one of claims 1-9 or the positive electrode plate prepared using the preparation method according to claim 10.

12. The battery cell according to claim 11, wherein the battery cell comprises an electrolyte, and conductivity $\sigma$ of the electrolyte satisfies: $3.3 \text{ mS cm}^{-1} \leq \sigma \leq 13 \text{ mS cm}^{-1}$.

13. A battery, comprising the battery cell according to claim 11 or 12.

14. An electrical apparatus, comprising the battery cell according to claim 11 or 12 and/or the battery according to claim 13.

**FIG. 1**

**FIG. 2**

300

| Providing a current collector | S301 |

| Arranging a first positive electrode active material layer on at least one side of the current collector | S302 |

| Arranging a second positive electrode active material layer on the first positive electrode active material layer | S303 |

# FIG. 3

400

# FIG. 4

500

400

**FIG. 5**

600

**FIG. 6**

600

601

500

602

**FIG. 7**

## INTERNATIONAL SEARCH REPORT

| International application No. |
|---|
| **PCT/CN2023/083773** |

### A. CLASSIFICATION OF SUBJECT MATTER

H01M4/36(2006.01)i; H01M4/131(2010.01)i; H01M10/0525(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, VEN, ENTXT, CNKI: 锂离子二次电池, 正极, 极片, 集流体, 层状, 过渡金属氧化物, 橄榄石, 磷酸盐化合物, 第一, 第二, lithium-ion secondary battery, positive electrode, electrode plate, current collector, layered, transition metal oxide, olivine, phosphate

### C. DOCUMENTS CONSIDERED TO BE RELEVANT

| Category* | Citation of document, with indication, where appropriate, of the relevant passages | Relevant to claim No. |
|---|---|---|
| X | CN 112820862 A (ZHUHAI COSMX BATTERY CO., LTD.) 18 May 2021 (2021-05-18) description, paragraphs 2-40, and figure 1 | 1-14 |
| X | CN 110660961 A (NINGDE CONTEMPORARY AMPEREX TECHNOLOGY CO., LTD.) 07 January 2020 (2020-01-07) description, paragraphs 4-67 | 1-14 |
| X | CN 115349185 A (LG ENERGY SOLUTION LTD.) 15 November 2022 (2022-11-15) description, paragraphs 3-116, and figure 1 | 1-14 |
| X | CN 1905265 A (SANYO ELECTRIC CO., LTD.) 31 January 2007 (2007-01-31) description, page 1, paragraph 2-page 11, paragraph 6, and figures 1-8 | 1-14 |
| A | JP 2016178070 A (NEC ENERGY DEVICES LTD.) 06 October 2016 (2016-10-06) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 December 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083773**

| Patent document cited in search report | | | Publication date (day/month/year) | Patent family member(s) | | | Publication date (day/month/year) |
|---|---|---|---|---|---|---|---|
| CN | 112820862 | A | 18 May 2021 | CN | 112820862 | B | 22 November 2022 |
| CN | 110660961 | A | 07 January 2020 | US | 2020006767 | A1 | 02 January 2020 |
| | | | | EP | 3588630 | A1 | 01 January 2020 |
| | | | | CN | 110660961 | B | 21 September 2021 |
| CN | 115349185 | A | 15 November 2022 | JP | 2023520362 | A | 17 May 2023 |
| | | | | WO | 2022103094 | A1 | 19 May 2022 |
| | | | | US | 2023155125 | A1 | 18 May 2023 |
| | | | | EP | 4109587 | A1 | 28 December 2022 |
| | | | | KR | 20220066702 | A | 24 May 2022 |
| | | | | IN | 202217056265 | A | 21 July 2023 |
| CN | 1905265 | A | 31 January 2007 | US | 2007026316 | A1 | 01 February 2007 |
| | | | | JP | 2007035488 | A | 08 February 2007 |
| | | | | KR | 20070015001 | A | 01 February 2007 |
| JP | 2016178070 | A | 06 October 2016 | JP | 6560879 | B2 | 14 August 2019 |

Form PCT/ISA/210 (patent family annex) (July 2022)